# EUROPÄISCHE PATENTANMELDUNG

(11) **EP 0 991 224 A2**
(43) Veröffentlichungstag der Anmeldung: **05.04.2000**
(21) Anmeldenummer: 99118736.0
(22) Anmeldetag: 22.09.1999
(51) Int. Cl.: H04L 1/20

(54) **Verfahren, Empfangseinrichtung und Funkstation zur Erkennung eines Nutzdatenblocks mit fehlerhaften Nutzdatensymbolen**

(30) Priorität: 29.09.1998 DE 19844702
(71) Anmelder: SIEMENS AKTIENGESELLSCHAFT, 80333 München (DE)
(72) Erfinder: Gossner, Jochen, D-86259 Schrobenhausen (DE)

(57) **Zusammenfassung**

Zur Erkennung eines über eine Funkschnittstelle übertragenen fehlerbehafteten Nutzdatenblocks wird jedem Nutzdatensymbol des Nutzdatenblocks mindestens ein Entscheidungswert zugeordnet, der eine Erkennbarkeit des Zustands des Nutzdatensymbols bewertet. Eine gebildete Summe der Entscheidungswerte wird anschließend mit Schwellenwerten verglichen und zumindest ein Ergebniswert abgeleitet. Aus dem Ergebniswert wird mittels einer Entscheidungslogik ein Indikator abgeleitet, der den Nutzdatenblock für ein Verwerfen markiert oder nicht.

## Beschreibung

Die Erfindung betrifft ein Verfahren, eine Empfangseinrichtung sowie eine Funkstation zur Erkennung eines Nutzdatenblocks mit fehlerhaften Nutzdatensymbolen.

In Funk-Kommunikationssystemen werden Nutzdaten, wie beispielsweise Sprache, Bildinformation oder andere Daten, mit Hilfe von elektromagnetischen Wellen über eine Funkschnittstelle zwischen einer sendenden und einer empfangenden Funkstation übertragen. Das Abstrahlen der elektromagnetischen Wellen erfolgt dabei mit Trägerfrequenzen, die in dem für das jeweilige System vorgesehenen Frequenzband liegen. Beim bekannten GSM-Mobilfunksystem (Global System for Mobile Communication), wie es unter anderem aus J. Biala, 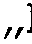 Mobilfunk und intelligente Netze", Vieweg Verlag, 1995, insbesondere den Seiten 57 bis 110, bekannt ist, liegen die Trägerfrequenzen im Bereich von 900 MHz. Für zukünftige Funkkommunikationssysteme, beispielsweise das UMTS (Universal Mobile Telecommunication System) oder andere Systeme der 3. Generation sind Frequenzen im Frequenzband von ca. 2000 MHz vorgesehen.

Stark schwankende Eigenschaften eines Übertragungskanals in einem Funk-Kommunikationssystems resultieren in einer hohen Fehlerhäufigkeit von Nutzdatensymbolen. Durch eine entsprechende Fehlerkorrektur wird diese Fehlerhäufigkeit auf einen für eine Empfangsqualität ausreichenden Bereich reduziert. Dies erfolgt unter anderem durch eine Kanalkodierung, die dem Strom von Nutzdatensymbolen eine Redundanz hinzufügt. Diese zusätzliche Redundanz ermöglicht ein Erkennen und Korrigieren von Übertragungsfehlern. Beim GSM-Mobilfunksystem existiert eine Kombination aus mehreren Verfahren, die unter anderem aus einem Blockcode, der Paritätsbits für eine Fehlererkennung erzeugt, und aus einem Faltungskode, der die zur Fehlerkorrektur notwendige Redundanz erzeugt, besteht. Abschließend werden die kodierten Nutzdatenblöcke nach einem Verschachteln (Interleaving) auf Funkblöcke abgebildet, moduliert und auf einer jeweiligen Trägerfrequenz übertragen.

Für die Übertragung von Sprachsignalen werden in dem GSM-Mobilfunksystem Sprachkodierer eingesetzt, die eine netzseitige 64 kbit/s Datenrate von PCM30-Kanälen auf beispielsweise eine Datenrate von 13 kbit/s (Nettodatenrate) reduzieren. In einem nachgeschalteten Kanalkodierer wird anschließend durch das Fehlerkorrekturverfahren zusätzliche Redundanz zu den Sprachsignalen hinzugefügt, so daß sich die Bruttodatenrate eines Verkehrskanals (TCH - Traffic Channel) auf beispielsweise 22,8 kbit/s erhöht. Dieses Beispiel bezieht sich auf einen Vollraten-Kodierer, wobei als Weiterentwicklung auch Halbraten-Kodierer eingesetzt werden, die nur die halbe Datenrate für die Sprachübertragung verwenden.

Wie unter anderem auf den Seiten 96 bis 110 des oben genannte Standes der Technik beschrieben ist, liegen die Sprachsignale in dem Verkehrskanal in Form von Nutzdatenblöcken mit jeweils 260 Nutzdatensymbolen (Bit) vor. Von diesen 260 Bit gehören 182 Bit der Klasse 1 an und erhalten einen Fehlerschutz, da sie durch ihren größeren Einfluß auf die Sprachqualität empfindlicher gegen Störungen sind und entsprechend besser geschützt werden müssen. Die restlichen 78 Bit der Klasse 2 sind dahingegen weniger sensitiv gegenüber Übertragungsfehlern und werden daher nicht durch einen zusätzlichen Fehlerschutz geschützt. Für die ersten 50 Bit der Klasse 1 wird ein 3 Bit langer zyklischer Kode (CRC - Cyclic Redundancy Check) berechnet, durch den im dem Empfänger eine Aussage über einen fehlerhaften Nutzdatenblock getroffen werden kann. Der große Aufwand für die Fehlerschutzkodierung der Sprachsignale liegt in der starken Komprimierung und der daraus folgenden großen Empfindlichkeit gegenüber Bitfehlern begründet. Auf der Empfangsseite wird ein Nutzdatenblock, in dem Nutzdatensymbole der Klasse 1 durch eine Auswertung von Paritätsbits durch den standardisierten CRC-Check als fehlerhaft erkannt werden, verworfen und der letzte korrekt empfangende Nutzdatenblock wiederholt bzw. eine Extrapolation der bisher empfangenden Sprachinformationen vorgenommen, um eine möglichst konstant hohe Sprachqualität zu erhalten. Weiterhin wird ein Nutzdatenblock verworfen, wenn bei der Übertragung aufgetretene fehlerhafte Nutzdatensymbole nicht durch den Fehlerschutz der Kanalkodierung korrigiert werden können.

Nachteilig tritt bei dem bekannten Verfahren der Erkennung von fehlerbehafteten Nutzdatenblöcken bei einem niedrigen Signal-zu-Rausch-Verhältnis empfangsseitig ein häufiges Nichterkennen eines fehlerbehafteten Nutzdatenblocks bzw. ein Verwerfen eines nicht fehlerbehafteten Nutzdatenblocks auf, wodurch die Empfangsqualität und die Sprachqualität nach der Rückwandlung spürbar verringert wird.

Der Erfindung liegt die Aufgabe zugrunde, ein Verfahren, eine Empfangseinrichtung und eine Funkstation anzugeben, die eine genauere Unterscheidung nach fehlerbehafteten und nicht fehlerbehafteten Nutzdatenblöcken und somit eine höhere Empfangsqualität ermöglichen. Diese Aufgabe wird gemäß der Erfindung durch die Merkmale der unabhängigen Patentansprüche gelöst. Vorteilhafte Ausgestaltungen der Erfindung sind den jeweiligen Unteransprüchen zu entnehmen.

Erfindungsgemäß wird zur Erkennung eines fehlerhaften Nutzdatenblocks mit Nutzdatensymbolen, der über eine Funkschnittstelle eines Funk-Kommunikationssystems übertragen und in einer Empfangseinrichtung einer Funkstation empfangen wird, jedem Nutzdatensymbol des Nutzdatenblocks mindestens ein Entscheidungswert zugeordnet, der eine Erkennbarkeit des Zustands des Nutzdatensymbols bewertet. Eine gebildete Summe der Entscheidungswerte wird anschließend mit zumindest zwei vorgegebenen Schwellenwerten verglichen und aus dem Vergleich zumindest ein Ergebniswert abgeleitet. Aus diesem Ergebniswert wird mittels einer Entscheidungslogik ein Indikator abgeleitet, der den Nutzdatenblock für ein Verwerfen markiert oder nicht.

Vorteilhaft wird durch die Erfindung eine bessere Detektion von fehlerhaften Nutzdatensymbolen sichergestellt, so daß eine genauere Selektion von zu verwerfenden Nutzdatenblöcken erfolgt. Dieses wird durch die erfindungsgemäße Bewertung jedes einzelnen Nutzdatensymbols, der anschließenden Summenbildung der Entscheidungswerte und dem Vergleich mit Schwellenwerten erreicht. Hierdurch wird gegenüber dem Stand der Technik vorteilhaft ein erforderliches Signal-zu-Rausch-Verhältnis zur Einhaltung eines gegebenen Grenzwertes an fehlerhaften Nutzdatensymbolen verringert, da je nach der Leistungsfähigkeit der Empfangseinrichtung eine sichere Erkennbarkeit der Nutzdatensymbole gegeben ist. Weiterhin wird durch die Bewertung der Anteil der nicht detektierten fehlerbehafteten Nutzdatenblöcke deutlich gegenüber dem Stand der Technik verringert, wodurch beispielsweise bei Sprachsignalen vorteilhaft die Sprachqualität erhöht wird.

Gemäß einer ersten Weiterbildung der Erfindung werden die Nutzdatensymbole des Nutzdatenblocks in mehrere Klassen eingeteilt, die jeweils für die Übertragung über die Funkschnittstelle mit einem unterschiedlichen Fehlerschutz versehen werden. Für jede Klasse von Nutzdatensymbolen wird ein Vergleich mit den vorgegebenen Schwellenwerten durchgeführt und daraus ein jeweiliger Ergebniswert abgeleitet.

Einer auf die vorhergehende Weiterbildung bezogenen Weiterbildung der Erfindung zufolge werden für die Klassen von Nutzdatensymbolen jeweils unterschiedliche Schwellenwerte vorgegeben. Dieses ermöglicht vorteilhaft, daß abhängig von der Wichtigkeit der Nutzdatensymbole eine unterschiedliche Fehlertoleranz definiert werden kann. Hierbei können für beispielsweise durch eine hohe Redundanz geschützte Nutzdatensymbole, die sehr wichtig für eine Rückwandlung sind, höhere Schwellenwerte vorgegeben werden als für mit nur wenig oder keiner Redundanz versehene Nutzdatensymbole.

Gemäß einer weiteren Weiterbildung der Erfindung wird zusätzlich eine ermittelte Anzahl von fehlerhaften Nutzdatensymbolen des Nutzdatenblocks mit zumindest zwei vorgegebenen Schwellenwerten verglichen und daraus ein erster zusätzlicher Ergebniswert abgeleitet. Dieser erste zusätzliche Ergebniswert kann mit dem bzw. den weiteren Ergebniswerten korreliert werden, indem er beispielsweise ebenfalls der Entscheidungslogik in der Empfangseinrichtung zugeführt wird. Die Ermittlung der Anzahl fehlerhafter Nutzdatensymbole wird beispielsweise in dem GSM-Mobilfunksystem von einem Viterbi-Detektor in der Empfangseinrichtung standardgemäß durchgeführt und liegt bereits als Wert vor.

Einer weiteren Weiterbildung der Erfindung zufolge wird zusätzlich eine bekannte Überprüfung nach fehlerhaften Nutzdatensymbolen einer bestimmten Klasse von Nutzdatensymbolen durchgeführt. Aus dieser Überprüfung wird ein zweiter zusätzlicher Ergebniswert abgeleitet. Diese Überprüfung ist ebenfalls aus dem Stand der Technik des GSM-Mobilfunksystems, wie er in der Beschreibungseinleitung angegeben ist, bekannt. Dabei wird bei einem Auftreten eines fehlerhaften Nutzdatensymbols der Klasse 1a, deren Nutzdatensymbole die wichtigsten Sprachinformationen beinhalten und durch eine hohe Redundanz geschützt sind, der Nutzdatenblock verworfen und nicht einer Weiterverarbeitung in der Empfangseinrichtung zugeführt.

Einer weiteren Weiterbildung zufolge werden die Schwellenwerte abhängig von Übertragungseigenschaften der Funkschnittstelle vorgegeben. Dieses ermöglicht vorteilhaft eine Beeinflussung der Empfangsqualität für unterschiedliche Übertragungskanäle, da beispielsweise abhängig von dem Ausbreitungsweg der Funksignale und der Sendefrequenz eine unterschiedliche Beeinflussung und Degradierung der Nutzdatensymbole erfolgt. Weiterhin können die Schwellenwerte der Leistungsfähigkeit der Empfangseinrichtung angepaßt und somit die Empfangsqualität optimiert werden.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: eine schematische Darstellung der Rahmenstruktur der Funkschnittstelle und des Aufbaus eines Funkblocks,
- FIG 3: eine schematische Darstellung einer Aufteilung des Nutzdatenblocks auf Zeitrahmen,
- FIG 4: eine schematische Darstellungen von verschiedenen Klassen Nutzdatensymbolen in einem Nutzdatenblock,
- FIG 5: ein Ablaufdiagramm eines Vergleiches mit Schwellenwerten, und
- FIG 6: ein Ablaufdiagramm einer erfindungsgemäßen Entscheidungslogik.

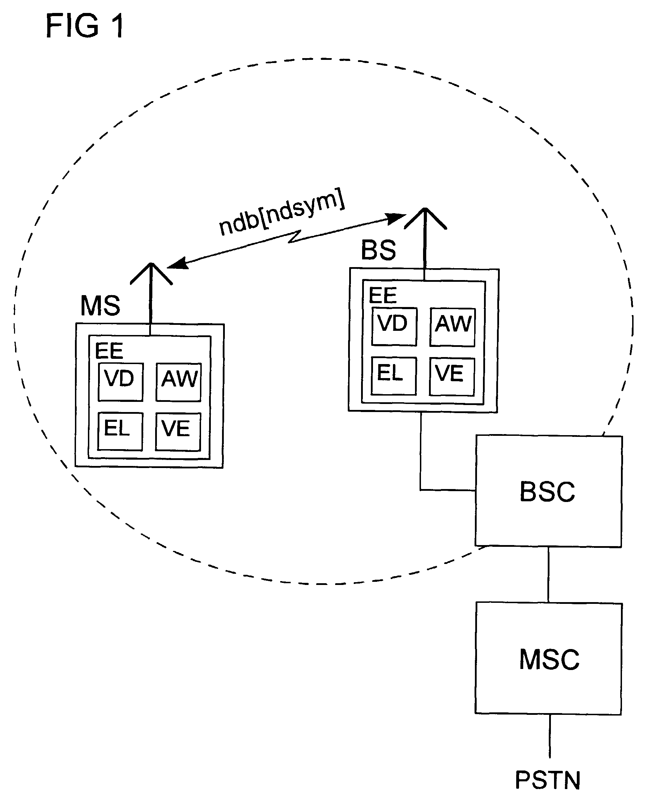

Das in FIG 1 dargestellte und beispielhaft als ein Mobilfunksystem ausgestaltete Funk-Kommunikationssystem entspricht in seiner Struktur einem bekannten GSM-Mobilfunksystem, das aus einer Vielzahl von Mobilvermittlungsstellen MSC besteht, die untereinander vernetzt sind bzw. den Zugang zu einem Festnerz PSTN herstellen. Weiterhin sind diese Mobilvermittlungsstellen MSC mit jeweils zumindest einer Basisstations-Steuerung BSC verbunden. Jede Basisstations-Steuerung BSC ermöglicht wiederum eine Verbindung zu zumindest einer Basisstation BS. Diese Basisstation BS ist eine Funkstation, die über eine Funkschnittstelle Kommunikationsverbindungen zu mobilen Funkstationen MS aufbauen und auslösen kann. Die Funktionalität dieser Struktur wird von dem erfindungsgemäßen Verfahren genutzt. Ein Einsatz in beispielsweise einem drahtlosen Teilnehmeranschlußsystem (Access-Network) ist dabei ebenso möglich.

In FIG 1 ist beispielhaft eine Verbindung zur Übertragung von Nutzdatensymbolen ndsym in Nutzdatenblöcken ndb in einem Übertragungskanal zwischen einer mobilen Funkstation MS und einer Basisstation BS dargestellt. Die Basisstation BS ist mit einer Antenneneinrichtung verbunden, die eine Funkzelle mit funktechnischen Ressourcen versorgt. Für den Empfang von Nutzdatenblöcken ndb mit Nutzdatensymbolen ndsym, die von der mobilen Funkstation MS gesendet werden, weist die Basisstation BS eine Empfangseinrichtung EE auf. Die Empfangseinrichtung EE wiederum weist neben bekannten Komponenten weitere Einrichtungen auf, die für die Erläuterung der Erfindung wesentlich sind und in der weiteren Figurenbeschreibung näher spezifiziert werden. Eine entsprechende Empfangseinrichtung EE kann auch in der mobilen Funkstation MS verwirklicht sein.

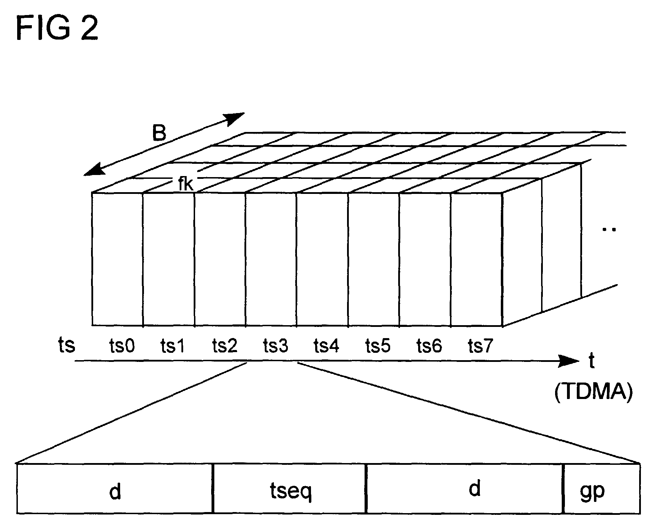

Die Rahmenstruktur der Funkschnittstelle ist aus der FIG 2 ersichtlich und entspricht der bekannten Funkschnittstelle eines GSM-Mobilfunksystems. Gemäß einer FDMA-Komponente ist eine Aufteilung eines breitbandigen Frequenzbereiches B, beispielsweise der Bandbreite B = 1,6 MHz, in mehrere Frequenzkanäle fk, beispielsweise acht Frequenzkanäle mit jeweils 200 kHz Bandbreite, vorgesehen. Weiterhin erfolgt gemäß einer TDMA-Komponente eine Aufteilung in Zeitschlitze ts, beispielsweise 8 Zeitschlitze ts0 bis ts7. Jeder Zeitschlitz ts innerhalb eines Frequenzkanals fk bildet einen Übertragungskanal. Die aufeinanderfolgenden Zeitschlitze ts werden nach einer Rahmenstruktur gegliedert, so daß acht Zeitschlitze ts0 bis ts7 zu einem Zeitrahmen tf zusammengefaßt werden.

Innerhalb der Frequenzkanäle fk, die zur Nutzdatenübertragung vorgesehen sind, werden Informationen mehrerer Verbindungen zeitlich getrennt in Funkblöcken übertragen. Diese Funkblöcke bestehen aus Abschnitten mit Daten d, in denen jeweils Abschnitte mit empfangsseitig bekannten Trainingssequenzen tseq eingebettet sind. Weiterhin ist innerhalb des Zeitschlitzes ts eine Schutzzeit gp zur Kompensation unterschiedlicher Signalaufzeiten der Verbindungen aufeinanderfolgender Zeitschlitze ts vorgesehen. Die Daten d können weiterhin verbindungsindividuell mit einer Feinstruktur, einem Spreizkode (CDMA-Kode), gespreizt werden, so daß empfangsseitig beispielsweise n Verbindungen durch diese CDMA-Komponente separierbar sind. Dieses Verfahren wird unter anderem in zukünftigen Mobilfunksystemen der dritten Generation UMTS eingesetzt.

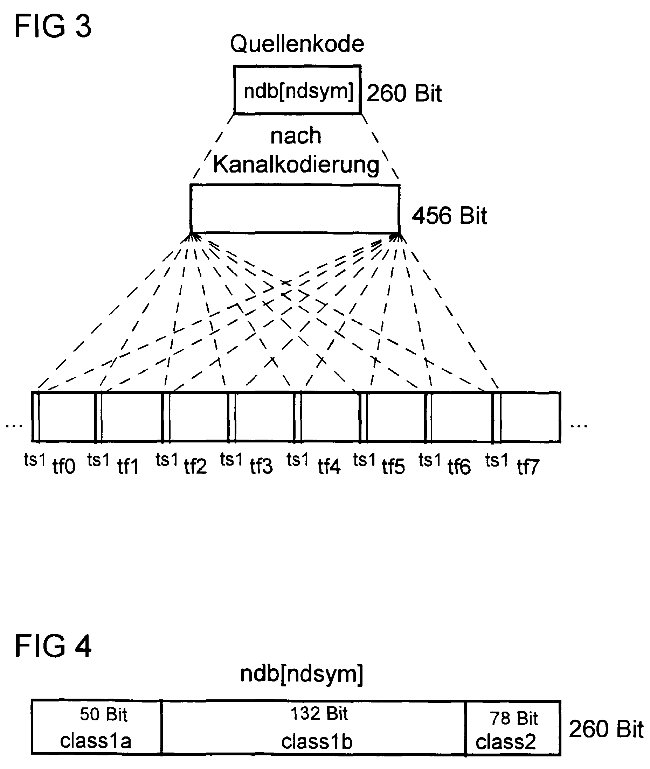

In der FIG 3 wird beispielhaft die Fehlerschutzkodierung eines Sprachsignals nach dem Stand der Technik gemäß dem GSM-Mobilfunksystem dargestellt. Als Grundlage für die Beschreibung der Kanalkodierung des Quellenkodes wird von einem Vollraten-Kodierer/Dekodierer (FR - Full Rate) ausgegangen, wobei das Prinzip der Kodierung jedoch ebenso auf einen Halbraten-Kodierers/Dekodierer (HR - Half Rate) oder auf einen Adaptiven-Multiraten-Kodierers/Dekodierer (AMR - Adaptive Multirate) angewendet werden kann. Ausgehend von einer Ausgangsdatenrate des vorgeschalteten Sprachkodierers von 13 kbit/s liegen an dem Kanalkodierereingang 260 Bit alle 20 ms an, welches jeweils einem Nutzdatenblock ndb mit 260 Nutzdatensymbolen ndsym entspricht. Diesem Quellenkode werden in dem Kanalkodierer aus dem Quellenkode berechnete, redundante Informationen hinzugefügt. Die Kanalkodierung des Quellenkodes erfolgt dabei in unterschiedlicher Weise, um bei eventuellen Störungen während der Übertragung auf der Luftschnittstelle, die abhängig von der Bedeutung der kodierten Nutzdatensymbole eine Beeinträchtigung der Übertragungsqualität bedeuten, eine Rückgewinnung der Nutzdatensymbole zu ermöglichen. Das Ausgangssignal des Kanalkodierers besitzt eine Datenrate von 22,8 kbit/s für den beispielhaft angenommenen Vollraten-Kodierer/Dekodierer.

Bei der Kanalkodierung werden 182 der 260 Bits Quellenkode faltungskodiert mit der Rate 1/2 (class1b), wovon wiederum 50 Bits zusätzlich durch einen Detektionskode (detection code) geschützt werden, bei dem 3 redundante Bits hinzugefügt werden, die ihrerseits ebenfalls durch die Faltungskodierung geschützt werden (class1a). Den sich ergebenden 185 Bits werden zusätzlich 4 Bits hinzugefügt und eine zweifache Faltung durchgeführt, so daß sich insgesamt 378 Bits ergeben. Die restlichen 78 Bits der 260 quellenkodierten Bits verbleiben unkodiert (class2). Die Länge des quellen- und kanalkodierten Sprachsignals ergibt sich somit zu insgesamt 456 Bits. Diese werden auf 8 Halbbursts mit jeweils 57 Bits eines Zeitschlitzes ts1 in den Zeitrahmen tf0 bis tf7 verteilt. Die gemäß der class1a kodierten Nutzdatensymbole ndsym beinhalten den wesentlichen zu schützenden Teil des Sprachsignals. Tritt ein Fehler in diesen 50 Bits auf, so wird der empfangende Teilnehmer ein lautes Störgeräusch anstatt eines 20 ms langen Sprachblocks vernehmen.

In der FIG 4 ist beispielhaft die Aufteilung der nach den class1a, class1b und class2 spezifizierten, quellenkodierten Nutzdatensymbole ndsym in einem Nutzdatenblock ndb mit 260 Bits vor der Kanalkodierung dargestellt.

In der empfangenden Basisstation BS gemäß der FIG 1 erfolgt in der Empfangseinrichtung EE ein Entfernen der durch die Kanalkodierung zugefügten Redundanz und eine Rückwandlung in den originären Nutzdatenblock ndb mit den Nutzdatensymbolen ndsym.

Die mit dem 3 Bit langem zyklischen Kode versehenen 50 Bit der class1a werden bei der Kanaldekodierung nach fehlerhaften Nutzdatensymbolen ndsym überprüft und ein zweiter Ergebniswert fcrc ermittelt, der einen binären Zustand:
fcrc=0 -> keine ermittelten fehlerhaften Nutzdatensymbole ndsym,
fcrc=1 -> mindestens ein fehlerhaftes Nutzdatensymbol ndsym,
annehmen kann. Nach dem Stand der Technik gemäß dem GSM-Mobilfunksystem wird dieser zweite Ergebniswert fcrc von einem Indikator bfi übernommen, der ebenfalls einen binären Zustand:
bfi=0 -> kein Verwerfen des Nutzdatenblocks ndb,
bfi=1 -> Verwerfen des Nutzdatenblocks ndb,
und den Nutzdatenblock ndb zum Verwerfen markiert oder nicht.

Weiterhin ermittelt ein in der Empfangseinrichtung EE verwirklichter Viterbi-Detektor VD für jeden empfangenen Nutzdatenblock ndb die Anzahl nbe der fehlerhaften Nutzdatensymbole ndsym. Übersteigt dabei gemäß dem Stand der Technik des GSM-Mobilfunksystems die Anzahl nbe einen Schwellenwert von 58, so wird der zweite Ergebniswert fcrc überschrieben, das Ergebnis von dem Indikator bfi übernommen und der Nutzdatenblock ndb durch den Indikator bfi (bfi=1) zum Verwerfen markiert. Ein derart markierter Nutzdatenblock ndb wird verworfen und nicht einer Weiterverarbeitung beispielsweise zur Rückwandlung in die ursprünglich gesendeten Sprachsignale in der Empfangseinrichtung EE zugeführt. Anstelle des verworfenen Nutzdatenblocks ndb wird beispielsweise der letzte korrekt empfangende Nutzdatenblock ndb wiederholt oder eine Extrapolation der bisher empfangenden Sprachinformationen vorgenommen, um eine möglichst konstant hohe Sprachqualität zu erhalten.

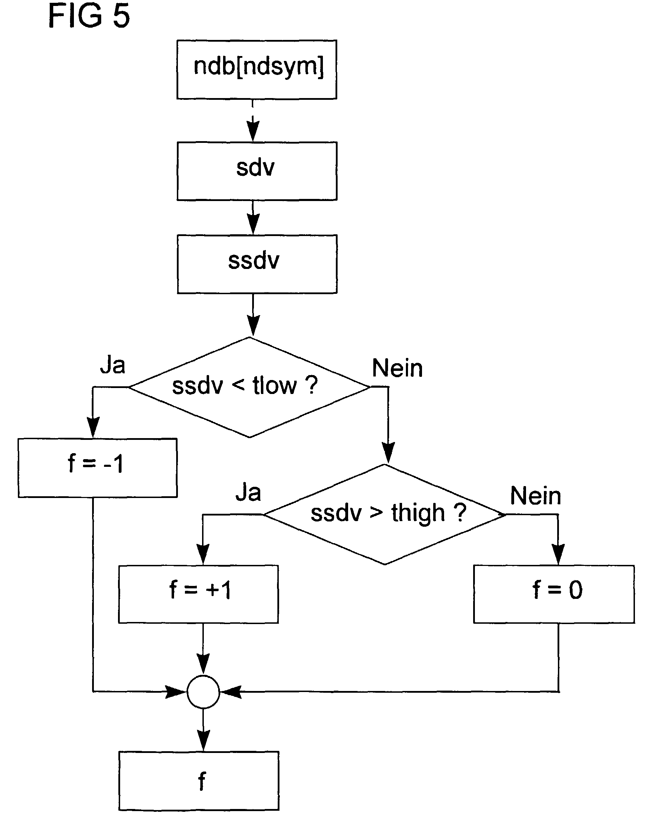

In der FIG 5 ist ein schematisches Ablaufdiagramm eines Vergleiches dargestellt, der in einer Vergleichseinrichtung VE in der Empfangseinrichtung EE durchgeführt wird. Zunächst wird in einer Auswerteeinrichtung AW in der Empfangseinrichtung EE jedem Nutzdatensymbol ndsym des Nutzdatenblocks ndb ein Entscheidungswert sdv zugeordnet. Dieser Entscheidungswert gibt Auskunft darüber, mit welcher Sicherheit das jeweilige Nutzdatensymbol ndsym einem binären Wert (0 oder 1) zugeordnet werden kann. Je größer der Absolutbetrag dieses Entscheidungswertes sdv ist, desto sicherer ist die Entscheidung nach einem bestimmten binären Wert. Aus den Entscheidungswerten sdv wird in einem nächsten Schritt die Summe ssdv der Absolutbeträge der Entscheidungswerte sdv berechnet. Diese Summe ssdv wird in der Vergleichseinrichtung VE mit zwei vorgegebenen Schwellenwerten tlow und thigh verglichen und ein Ergebniswert f abgeleitet. Der Ergebniswert f kann dabei einen ternären Zustand annehmen:
f=-1 -> ssdv ist kleiner als der untere Schwellenwert tlow;
f=+1 -> ssdv ist größer als der obere Schwellenwert thigh;
f=0 -> ssdv liegt innerhalb der Schwellenwerte tlow und thigh.
Als Ergebnis des Vergleichs wird der Ergebniswert f mit dem jeweiligen ternären Zustand ausgegeben.

Die Schwellenwerte thigh, tlow können dabei aufgrund von Erfahrungswerten festgelegt werden oder abhängig von Messungen der Übertragungseigenschaften der Funkschnittstelle durch die mobile Funkstation MS und/oder durch die Basisstation BS beispielsweise periodisch ermittelt werden.

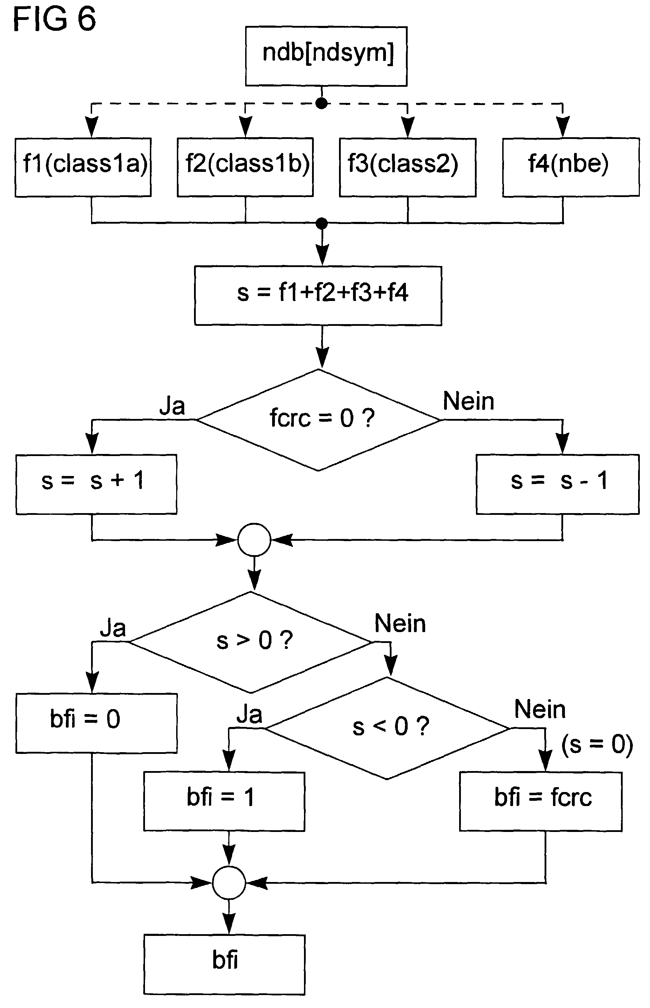

Das in der FIG 6 schematisch dargestellte Ablaufdiagramm basiert auf dem Ablaufdiagramm der FIG 5. Hierbei werden jedoch durch eine Unterscheidung der Nutzdatensymbole ndsym nach verschiedenen Klassen class1a, class1b, class2 mehrere Ergebniswerte f1, f2, f3 in der Vergleichseinrichtung VE ermittelt. Die für die Vergleiche verwendeten Schwellenwerte thigh, tlow können dabei für die jeweiligen Klassen unterschiedlich sein. Denkbar ist auch, daß fest definierte Schwellenwerte thigh, tlow für die verschiedenen Klassen mit einem unterschiedlichen Gewichtungsfaktor gewichtet werden. Weiterhin wird ein erster zusätzlicher Ergebniswert f4 aus einem Vergleich der Anzahl nbe fehlerhafter Nutzdatensymbole ndsym in dem Nutzdatenblock ndb mit zwei vorgegebenen Schwellenwerten ermittelt. Aus den somit zur Verfügung stehenden vier ternären Ergebniswerten f1 bis f4 wird in der Vergleichseinrichtung VE eine Summe s berechnet, die einer Entscheidungslogik EL in der Empfangseinrichtung EE zugeführt wird.

In der Entscheidungslogik EL erfolgt zunächst eine Verzweigung, die von dem zweiten zusätzlichen Ergebniswert fcrc, wie er oben bereits beschrieben wurde, abhängt. Ist bei der Prüfung der class1a Nutzdatensymbole ndsym kein fehlerhaftes Nutzdatensymbol ndsym ermittelt worden (fcrc=0), so wird zu der Summe s beispielsweise eine binäre 1 hinzuaddiert. Ist hingegen zumindest ein fehlerhaftes Nutzdatensymbol ndsym ermittelt worden (fcrc=1), so wird von der Summe s beispielsweise eine binäre 1 subtrahiert. Anschließend erfolgt ein Vergleich der berechneten Summe s mit einem vorgegebenen Wert, wie beispielweise dem angegebenen Nullwert. Abhängig vom Ergebnis des Vergleichs wird der binäre Zustand des Indikators bfi ermittelt, wobei für den Fall, daß die berechnete Summe s dem Nullwert entspricht, der Indikator bfi den binären Zustand des zweiten zusätzlichen Ergebniswertes fcrc übernimmt. Der ermittelte Indikator bfi wird daraufhin für die Markierung des Nutzdatenblocks ndb zum Verwerten bzw. zum Weiterverarbeiten in der Empfangseinrichtung ES verwendet. Durch die Entscheidungslogik EL wird eine Mehrheitsentscheidung hinsichtlich des Verwerfens oder nicht des Nutzdatenblocks ndb getroffen.

Anhand von zwei Beispielen soll die Entscheidungsfindung dargestellt werden. In dem ersten Beispiel wurden folgende ternäre und binäre Zustände für die Entscheidungswerte ermittelt: f1=0; f2=+1, f3=+1; f4=0; fcrc=0. Zwei ternäre Entscheidungswerte f1, f4) liefern keine bestimmte Aussage über die Detektierbarkeit bzw. die Anzahl nbe der fehlerhaften Nutzdatensymbole ndsym. Zwei ternäre Entscheidungswerte f2, f3 liefern hingegen die Aussage einer Weiterverarbeitung des Nutzdatenblocks ndb. Der zweite zusätzliche Ergebniswert fcrc, der die Nutzdatensymbole der class1a bewertet, gibt ebenfalls die Aussage der Weiterverarbeitung des Nutzdatenblocks ndb. Durch die Entscheidungslogik EL wird nun eine Mehrheitfindung durchgeführt und das Ergebnis liefert für den Indikator den Zustand bfi=0, d.h. der Nutzdatenblock ndb wird der Weiterverarbeitung in der Empfangseinrichtung EE zugeführt.

In dem zweiten Beispiel besitzen die Entscheidungswerte folgende Zustände: f1=-1; f2=+1; f3=+1; f4=0; fcrc=1. Ein ternärer Entscheidungswert f1 liefert die Aussage eines Verwerfens des Nutzdatenblocks ndb, zwei ternäre Entscheidungswerte f2, f3 liefern die Aussage einer Weiterverarbeitung des Nutzdatenblocks ndb, und der erste zusätzliche ternäre Entscheidungswert f4 liefert keine bestimmte Aussage. Der zweite zusätzliche Ergebniswert fcrc liefert die Aussage des Verwerfens des Nutzdatenblocks ndb. Wiederum wird durch die Entscheidungslogik EL eine Mehrheitsfindung durchgeführt, wobei der Zustand des zweiten zusätzlichen Ergebniswertes fcrc=1 für den Zustand des Indikators bfi=1 übernommen und der Nutzdatenblock für ein Verwerfen markiert wird.

## Patentansprüche

1. Verfahren zur Erkennung eines Nutzdatenblocks (ndb) mit fehlerhaften Nutzdatensymbolen (ndsym), der über eine Funkschnittstelle eines Funk-Kommunikationssystems übertragen und in einer Empfangseinrichtung (EE) einer Funkstation (z.B. BS) empfangen wird, bei dem
- jedem Nutzdatensymbol (ndsym) des Nutzdatenblocks (ndb) mindestens ein Entscheidungswert (sdv) zugeordnet wird, der eine Erkennbarkeit des Zustands des jeweiligen Nutzdatensymbols (ndsym) bewertet,
- eine Summe (ssdv) der Entscheidungswerte (sdv) gebildet und mit zumindest zwei vorgegebenen Schwellenwerten (tlow, thigh) verglichen wird,
- aus dem Vergleich zumindest ein Ergebniswert (f1, f2, f3) abgeleitet wird, und
- mittels des einer Entscheidungslogik (EL) zugeführten Ergebniswertes (f1, f2, f3) ein Indikator (bfi) abgeleitet wird, der den Nutzdatenblock (ndb) für ein Verwerfen markiert oder nicht.

2. Verfahren nach dem vorhergehenden Anspruch, bei dem
- die Nutzdatensymbole (ndsym) des Nutzdatenblocks (ndb) in mehrere Klassen (class1a, class1b, class2) eingeteilt werden, die jeweils für die Übertragung über die Funkschnittstelle mit einem unterschiedlichen Fehlerschutz versehen werden, und
- für jede Klasse (class1a, class1b, class2) ein Vergleich mit den vorgegebenen Schwellenwerten (tlow, thigh) durchgeführt und daraus jeweils der Ergebniswert (f1, f2, f3) abgeleitet wird.

3. Verfahren nach dem vorhergehenden Anspruch, bei dem für die Klassen (class1a, class1b, class2) jeweils unterschiedliche Schwellenwerte (tlow, thigh) vorgegeben werden.

4. Verfahren nach einem vorhergehenden Anspruch, bei dem zusätzlich eine ermittelte Anzahl (nbe) von fehlerhaften Nutzdatensymbolen (ndsym) des Nutzdatenblocks (ndb) mit zumindest zwei vorgegebenen Schwellenwerten (nbelow, nbehigh) verglichen wird, und daraus ein erster zusätzlicher Ergebniswert (f4) abgeleitet wird.

5. Verfahren nach einem der Ansprüche 2 bis 4, bei dem zusätzlich eine bekannte Überprüfung nach fehlerhaften Nutzdatensymbolen (ndsym) einer bestimmten Klasse (class1a) von Nutzdatensymbolen (ndsym) durchgeführt wird, und daraus ein zweiter zusätzlicher Ergebniswert (fcrc) abgeleitet wird.

6. Verfahren nach einem vorhergehenden Anspruch, bei dem eine Summe (s) der Ergebniswerte (f1, f2, f3, f4) gebildet wird, die der Entscheidungslogik (EL) zugeführt wird.

7. Verfahren nach einem der vorhergehenden Ansprüche, bei dem die Schwellenwerte (tlow, thigh) abhängig von Übertragungseigenschaften der Funkschnittstelle vorgegeben werden.

8. Empfangseinrichtung (EE) einer Funkstation (z.B. BS) eines Funk-Kommunikationssystems zur Erkennung eines Nutzdatenblocks (ndb) mit fehlerhaften Nutzdatensymbolen (ndsym), mit
- einer Auswerteeinrichtung (AW) zum Zuordnen von jeweils mindestens einem Entscheidungswert (sdv) zu den Nutzdatensymbolen (ndsym) des Nutzdatenblocks (ndb), wobei der Entscheidungswert (sdv) eine Erkennbarkeit des Wertes des jeweiligen Nutzdatensymbols (ndsym) bewertet,
- einer Vergleichseinrichtung (VE) zum Vergleichen einer Summe (ssdv) der Entscheidungswerte (sdv) mit zumindest zwei vorgegebenen Schwellenwerten (tlow, thigh), und zum Ableiten zumindest eines Ergebniswertes (f1, f2, f3) aus diesem Vergleich, und
- einer Entscheidungslogik (EL) zum Ableiten eines Indikators (bfi) aus den Ergebniswerten (f1, f2, f3, f4), wobei der Indikator (bfi) den Nutzdatenblock (ndb) für ein Verwerfen markiert oder nicht.

9. Empfangseinrichtung (EE) nach Anspruch 8, mit
einem Viterbi-Detektor (VD) zum Ermitteln einer Anzahl (nbe) von fehlerhaften Nutzdatensymbolen (ndsym) in dem Nutzdatenblock (ndb), wobei die Vergleichseinrichtung (VE) die Anzahl (nbe) mit zumindest zwei vorgegebenen Schwellenwerten (nbelow, nbehigh) vergleicht und daraus einen ersten zusätzlichen Ergebniswert (f4) ableitet.

10. Funkstation eines Funk-Kommunikationssystems mit
zumindest einer Empfangseinrichtung (EE) gemäß Patentanspruch 8 oder 9.

11. Funkstation nach Anspruch 10,
die als eine ortsfeste Funkstation (BS) oder als eine mobile Funkstation (MS) eines Mobilfunksystems ausgestaltet ist.
